# EUROPÄISCHE PATENTANMELDUNG

(11) **EP 1 514 737 A2**
(43) Veröffentlichungstag der Anmeldung: **16.03.2005**
(21) Anmeldenummer: 04028733.6
(22) Anmeldetag: 17.11.2000
(51) Int. Cl.: B60R 16/02, H02J 1/14

(54) **Stromversorgung für Fahrzeuge**

(30) Priorität: 02.12.1999 DE 19958098
(62) Teilanmeldung aus: 00124346.8
(71) Anmelder: TRW Automotive Electronics & Components GmbH & Co. KG, 78315 Radolfzell (DE)
(72) Erfinder: Peter, Cornelius, 77815 Bühl (DE)
(74) Vertreter: Degwert, Hartmut, Dipl.-Phys.

(57) **Zusammenfassung**

Die elektrische Stromversorgung für Fahrzeuge enthält einen Akkumulator und einen Verteiler, der einen Eingang für einen Akkumulator-Pol und mehrere Ausgänge aufweist, an denen die Akkumulator-Spannung für verschiedene Verbraucher bereitgestellt wird. Zwischen dem Eingang für einen Akkumulator-Pol und den Ausgängen sind Halbleiter-Schalter angeordnet, die durch eine digitale Steuerschaltung angesteuert werden. Die Steuerschaltung weist eine Eingangsschnittstelle für Sensor-Signale auf, die für Betriebsparameter repräsentativ sind. Die Stromversorgung gewährleistet eine bedarfsgerechte Bereitstellung von elektrischer Energie für die verschiedenen Verbraucher im Fahrzeug.

## Beschreibung

Die Erfindung betrifft eine elektrische Stromversorgung für Fahrzeuge.

In Fahrzeugen wird die elektrische Energie für den Betrieb der verschiedenen elektrischen Verbraucher einem Akkumulator entnommen, der bei Betrieb der Brennkraftmaschine durch einen Generator aufgeladen wird. Einer der Akkumulator-Pole wird unmittelbar mit der Fahrzeugmasse verbunden. Der andere Akkumulator-Pol, im allgemeinen der Pluspol, wird bei modernen Fahrzeugen über einen Verteiler mit mehreren Ausgängen und integrierten Sicherungen zu den verschiedenen Verbrauchern geführt.

Durch die Erfindung wird eine elektrische Stromversorgung für Fahrzeuge geschaffen, die eine bedarfsgerechte Nutzung der vom Akkumulator bereitgestellten Energiereserve ermöglicht. Gemäß der Erfindung ist zwischen dem Eingang für einen Akkumulator-Pol und wenigstens einem der Ausgänge des Verteilers ein Halbleiter-Schalter angeordnet, der durch eine elektronische Steuereinheit angesteuert wird; die Steuereinheit weist eine Eingangsschnittstelle für Sensor-Signale auf, die für Betriebsparameter repräsentativ sind. Die Steuereinheit hat somit eine aktive Kontrolle über den oder die an den mit einem Halbleiter-Schalter versehenen Ausgang angeschlossenen Verbraucher. Diese Kontrolle kann in einer bedarfsgerechten Ein- oder Abschaltung bestehen, oder auch in einer Modulation, insbesondere durch Pulsdauermodulation.

Bei einer besonders vorteilhaften Ausführungsform der Erfindung wird wenigstens derjenige Ausgang, an den die im wesentlichen durch Glühbirnen gebildete Fahrzeugbeleuchtung angeschlossen ist, durch Pulsdauermodulation auf einen effektiven Spannungswert geregelt, für den die Glühbirnen ausgelegt sind. Die vom Generator bereitgestellte Ladespannung für den Akkumulator muß nun nicht mehr mit Rücksicht auf die Lebensdauer der Glühbirnen auf einen Wert begrenzt werden, der deutlich niedriger ist als die optimale Ladespannung unter bestimmten Betriebsbedingungen.

Weiterhin ist bei der bevorzugten Ausführungsform vorgesehen, durch permanente Überwachung der Lade- und Entladeströme und Integration der gemessenen Stromwerte eine für den Ladezustand des Akkumulators repräsentative Größe zu erzeugen. In Abhängigkeit vom Ladezustand des Akkumulators können dann die verschiedenen Verbraucher nach einem Prioritätsschema aus dem Akkumulator versorgt werden. Dieses Konzept ermöglicht bei niedrigem Ladestand des Akkumulators den Erhalt wesentlicher Funktionen über eine verlängerte Zeitspanne, so daß ein Fahrzeug beispielsweise beim Ausfall des Generators länger betriebsbereit bleibt.

Weitere Merkmale und Vorteile der Erfindung ergeben sich aus der folgenden Beschreibung und aus den Zeichnungen, auf die Bezug genommen wird. In den Zeichnungen zeigen:
Figur 1 ein Blockdiagramm der elektrischen Stromversorgung;
Figur 2 eine schematische Darstellung einer Einrichtung zur Strommessung mittels magnetoresistiven Elementen;
Figur 3 ein Diagramm, das den Anlasserstrom über die Zeit für verschiedene Betriebszustände darstellt;
Figur 4 ein Diagramm, das den Ladestrom zeigt; und
Figur 5 ein Diagramm, das den vom Generator gelieferten Strom nach Gleichrichtung zeigt.

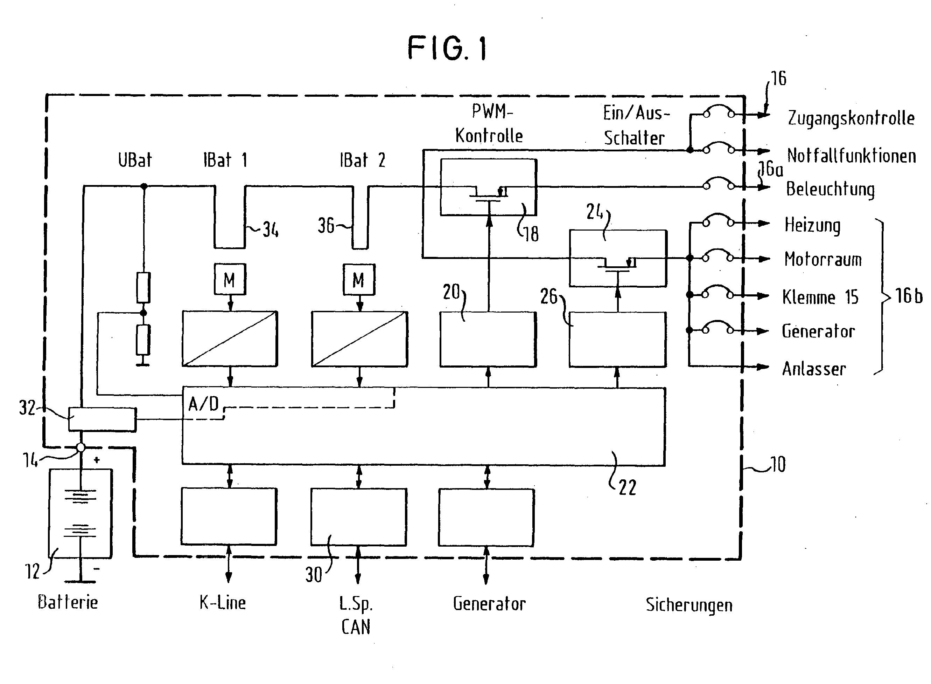

Die Stromversorgung wird in einem Gehäuse 10 aufgebaut, das auf den Akkumulator 12 aufgesetzt wird, vorzugsweise unmittelbar neben dem Pluspol. Die Stromversorgung hat einen Eingang 14, der mit dem Pluspol des Akkumulators unmittelbar verbunden ist. Ferner hat die Stromversorgung eine Reihe von Ausgängen 16, an die die verschiedenen Verbraucher angeschlossen werden. Bei der in Figur 1 gezeigten Ausführungsform ist allen Ausgängen 16, mit Ausnahme des für den Anlasser vorgesehenen Ausganges, eine Sicherung vorgeschaltet. Der mit 16a bezeichnete Ausgang ist zum Anschließen der Fahrzeugbeleuchtung vorgesehen, die überwiegend aus Glühbirnen besteht. Diesem Ausgang 16a ist ein Halbleiter-Schalter 18 vorgeschaltet. Dieser Halbleiterschalter 18 wird mittels einer Treiberschaltung 20 von einer digitalen Steuereinheit 22 angesteuert. Die Ansteuerung erfolgt in der Weise, daß durch Pulsdauermodulation am Ausgang 16a eine Betriebsspannung bereitgestellt wird, deren Effektivwert auf die vorgesehene Betriebsspannung der in der Fahrzeugbeleuchtung verwendeten Glühbirnen begrenzt ist.

Der in Figur 1 mit 16b bezeichneten Gruppe von Ausgängen ist ein Halbleiter-Schalter 24 vorgeschaltet. Dieser Halbleiter-Schalter 24 wird über eine Treiberschaltung 26 durch die digitale Steuereinheit 22 angesteuert. Da an einen der Ausgänge 16b der Anlasser angeschlossen wird, ist der Halbleiter- Schalter 24 durch Parallelschaltung mehrerer Halbleiterelemente sehr niederohmig ausgelegt. Durch acht parallelgeschaltete Halbleiter-Schalter vom Typ MOSFET ist ein Widerstand von weniger als 0,5 mΩ bei 25°C erreichbar.

Eingangsseitig hat die digitale Steuereinheit 22 mehrere Schnittstellen zum Anlegen von analogen und digitalen Signalen, die für verschiedene Betriebsparameter repräsentativ sind. Dazu gehört auch eine Schnittstelle 30, an die ein bidirektionales Bussystem (CAN) angeschlossen wird.

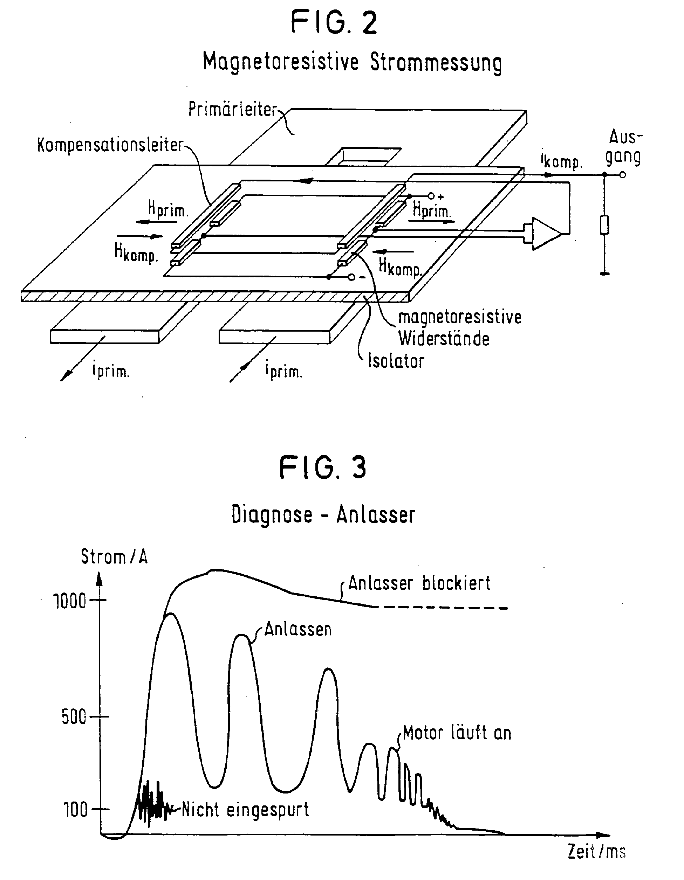

Für die Optimierung der Ladespannung müssen zwei Größen berücksichtigt werden, nämlich die Temperatur im Inneren des Akkumulators und dessen Ladezustand. Die Temperatur am Akkumulator unmittelbar neben dem Pluspol ist hinreichend repräsentativ für die Innentemperatur. Bei der erfindungsgemäßen Stromversorgung ist ein Temperaturfühler 32 in Form eines NTC-Widerstandes unmittelbar neben dem Pluspol des Akkumulators angeordnet und mit einem A/D-Eingang der digitalen Steuereinheit 22 verbunden. Der Ladezustand des Akkumulators wird durch permanente Überwachung der Lade- und Entladeströme ermittelt, indem die Meßwerte integriert werden. Die Messung erfolgt vorzugsweise in zwei aneinander anschließenden Kanälen, die eine Bandbreite von 0,1 A bis 800 A (80 dB) abdecken. Dazu sind zwei Meßschleifen 34, 36 vorgesehen, an denen magnetoresistive Widerstände wie in Figur 2 gezeigt angeordnet sind.

Bei der bevorzugten Ausführungsform wird die Strommessung auch für Diagnosezwecke genutzt. Figur 3 zeigt als Beispiel die Diagnose anhand des Anlasserstroms.

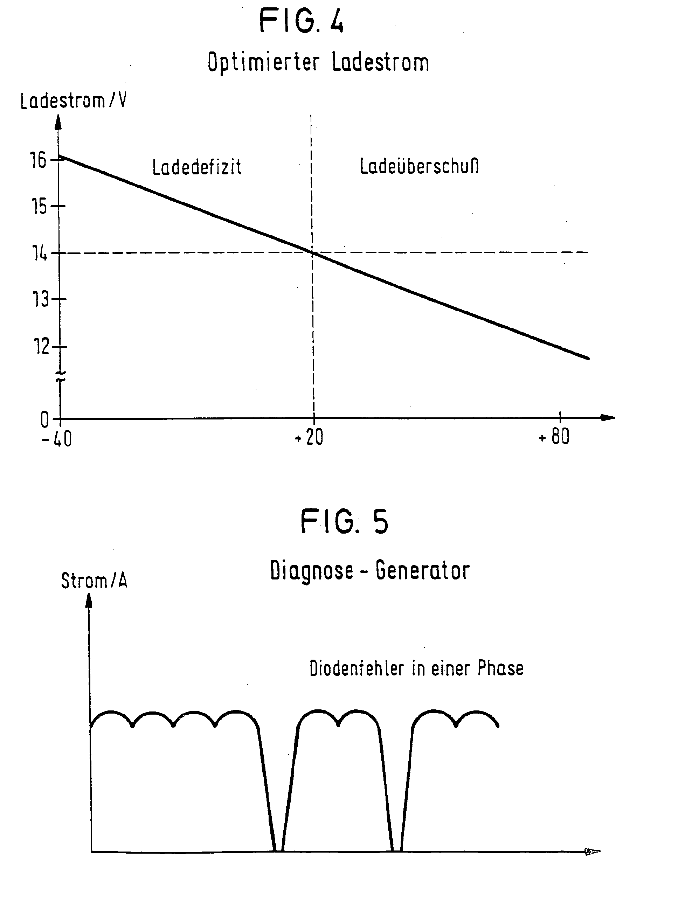

Figur 4 zeigt die Optimierung des Ladestroms, die ohne Rücksicht auf durch Glühbirnen der Fahrzeugbeleuchtung oder dergleichen gegebene Beschränkungen erfolgen kann.

Figur 5 zeigt als weiteres Beispiel für die mit der erfindungsgemäßen Stromversorgung erreichte Funktionalität die Diagnose des Generatorzustandes anhand des Generatorstroms, bei dem periodische Spannungseinbrüche auf defekte Gleichrichterdioden hinweisen.

Die mit der erfindungsgemäßen Stromversorgung zur Verfügung gestellten Leistungsmerkmale können in vier Gruppen eingeteilt werden:
1. Akkumulator-Management
   - Ladezustand durch Stromintegration
   - optionale Anzeige des Ladezustandes
   - optimierte Ladespannung (Temperatur, Ladezustand, Batterielebensdauer)
   - Spannungsregelung für alle Glühfadenbirnen, vorzugsweise Pulsdauermodulation bei etwa 90 Hz.
      Durch diese erste Gruppe von Leistungsmerkmalen ergibt sich eine zuverlässige Batterieladung über alle Temperaturbereiche. Insbesondere läßt sich die Ladungsreserve bei tiefen Temperaturen vergrößern. Schließlich ergibt sich eine verlängerte Lebensdauer sowohl der Glühfadenbimen der Fahrzeugbeleuchtung als auch des Akkumulators selbst.
2. Verbraucher-Management
   - prioritätsgesteuerte Verbrauchsreduzierung anhand der über ein Bussystem (CAN) abgefragten Betriebsparameter
   - zwei Betriebsmodi, Zündung Ein und Zündung Aus
   - Anpassung der Leerlaufdrehzahl (Anhebung bei niedrigem Ladezustand)
   - Begrenzung der Anlasser-Betätigungszeit (Vermeidung von Mißbrauch).
      Durch diese Leistungsmerkmale werden die verfügbaren Ladungsreserven gesteigert.
3. Sicherheitsfunktionen
   - Kurzschlußschutz für Anlasser
   - Stromabschaltung im Notfall (bei Unfall)
   - Stromabschaltung bei aktiviertem Alarmsystem
   - Stromabschaltung für den Transport.
      Diese Leistungsmerkmale erhöhen die Sicherheit und den Schutz.
4. Diagnosefunktionen
   - Anlasser blockiert, Ritzel nicht eingespurt
   - Generatorregler, Diodenfehler
   - Leckströme.

Mit dieser Gruppe von Leistungsmerkmalen ergibt sich ein optimiertes Werkzeug zur Überprüfung des elektrischen Systems im Fahrzeug.

## Patentansprüche

1. Elektrische Stromversorgung für Fahrzeuge, mit einem Akkumulator (12) und einem Verteiler, der einen Eingang (14) für einen Akkumulator-Pol und mehrere Ausgänge (16) aufweist, an denen die Akkumulator-Spannung für verschiedene Verbraucher bereitgestellt wird, wobei zwischen dem Eingang (14) für einen Akkumulator-Pol und wenigstens einem der Ausgänge (16) ein Halbleiter-Schalter (18, 24) angeordnet ist, der durch eine elektronische Steuereinheit angesteuert wird, und die Steuereinheit eine Eingangsschnittstelle für Sensor-Signale aufweist, die für Betriebsparameter repräsentativ sind, **dadurch gekennzeichnet, daß** durch permanente Messung der Verbraucher- und Ladeströme und Integration der Strom-Meßwerte eine den Ladezustand anzeigende Kenngröße erzeugt wird.

2. Elektrische Stromversorgung für Fahrzeuge, mit einem Akkumulator (12) und einem Verteiler, der einen Eingang (14) für einen Akkumulator-Pol und mehrere Ausgänge (16) aufweist, an denen die Akkumulator-Spannung für verschiedene Verbraucher bereitgestellt wird, wobei zwischen dem Eingang (14) für einen Akkumulator-Pol und wenigstens einem der Ausgänge (16) ein Halbleiter-Schalter (18, 24) angeordnet ist, der durch eine elektronische Steuereinheit angesteuert wird, und die Steuereinheit eine Eingangsschnittstelle für Sensor-Signale aufweist, die für Betriebsparameter repräsentativ sind, **dadurch gekennzeichnet, daß** neben dem Pluspol des Akkumulators ein Temperaturfühler angeordnet ist, der an einen A/D-Eingang der Steuereinheit angeschlossen ist.

3. Elektrische Stromversorgung für Fahrzeuge, mit einem Akkumulator (12) und einem Verteiler, der einen Eingang (14) für einen Akkumulator-Pol und mehrere Ausgänge (16) aufweist, an denen die Akkumulator-Spannung für verschiedene Verbraucher bereitgestellt wird, wobei zwischen dem Eingang (14) für einen Akkumulator-Pol und wenigstens einem der Ausgänge (16) ein Halbleiter-Schalter (18, 24) angeordnet ist, der durch eine elektronische Steuereinheit angesteuert wird, und die Steuereinheit eine Eingangsschnittstelle für Sensor-Signale aufweist, die für Betriebsparameter repräsentativ sind, **dadurch gekennzeichnet, daß** an die Eingangsschnittstelle ein vorzugsweise bidirektionales Bussystem (CAN) anschließbar ist.

4. Elektrische Stromversorgung für Fahrzeuge, mit einem Akkumulator (12) und einem Verteiler, der einen Eingang (14) für einen Akkumulator-Pol und mehrere Ausgänge (16) aufweist, an denen die Akkumulator-Spannung für verschiedene Verbraucher bereitgestellt wird, wobei zwischen dem Eingang (14) für einen Akkumulator-Pol und wenigstens einem der Ausgänge (16) ein Halbleiter-Schalter (18, 24) angeordnet ist, der durch eine elektronische Steuereinheit angesteuert wird, und die Steuereinheit eine Eingangsschnittstelle für Sensor-Signale aufweist, die für Betriebsparameter repräsentativ sind, **gekennzeichnet durch** eine Stromabschaltung bei einem Einbruch-Alarm.

5. Stromversorgung nach einem der Ansprüche 2, 3 und 4, **dadurch gekennzeichnet, daß** durch permanente Messung der Verbraucher- und Ladeströme und Integration der Strom-Meßwerte eine den Ladezustand anzeigende Kenngröße erzeugt wird.

6. Stromversorgung nach Anspruch 1 oder 5, **dadurch gekennzeichnet, daß** die Strommessung unmittelbar hinter dem Eingang für den Akkumulator-Pol in mehreren aufeinanderfolgenden Strombereichen erfolgt.

7. Stromversorgung nach Anspruch 1, 5 oder 6, **dadurch gekennzeichnet, daß** die Strommessung mittels magnetoresistiven Elementen erfolgt.

8. Stromversorgung nach Anspruch 1, 5, 6 oder 7, **dadurch gekennzeichnet, daß** ein gemessener Verbraucherstrom zum Zweck der Diagnose des Zustandes dieses Verbrauchers ausgewertet wird.

9. Stromversorgung nach Anspruch 8, **dadurch gekennzeichnet, daß** aus dem Anlasser-Strom Diagnose-Informationen über wenigstens einen der folgenden Zustände abgeleitet werden:
- Anlassen
- Motoranlauf
- Ritzel nicht eingespurt
- Blockierung.

10. Stromversorgung nach einem der Ansprüche 1, 5 bis 9, **dadurch gekennzeichnet, daß** der gemessene Ladestrom zum Zweck der Diagnose des Zustandes des Stromgenerators ausgewertet wird.

11. Stromversorgung nach Anspruch 10, **dadurch gekennzeichnet, daß** aus periodischen Einbrüchen der Ladespannung auf eine defekte Gleichrichter-Diode des Wechselstrom-Generators geschlossen wird.

12. Stromversorgung nach einem der Ansprüche 1, 5 bis 11, **gekennzeichnet durch** eine Anzeigeeinrichtung für den Ladezustand des Akkumulators.

13. Stromversorgung nach einem der Ansprüche 1, 5 bis 12, **gekennzeichnet durch** eine Detektoreinrichtung für Leckströme.

14. Stromversorgung nach einem der Ansprüche 1, 5 bis 13, **dadurch gekennzeichnet, daß** bei einem niedrigen Ladezustand die Leerlaufdrehzahl der den Generator und das Fahrzeug antreibenden Brennkraftmaschine erhöht wird.

15. Stromversorgung nach einem der Ansprüche 1, 5 bis 14, **gekennzeichnet durch** eine von der Steuereinheit kontrollierte Begrenzung der Betätigungsdauer des Anlassers.

16. Stromversorgung nach einem der vorangegangenen Ansprüche, **dadurch gekennzeichnet, daß** einer der Ausgänge durch Ansteuerung des Halbleiter-Schalters pulsdauermoduliert ist.

17. Stromversorgung nach Anspruch 16, **dadurch gekennzeichnet, daß** der pulsdauermodulierte Ausgang auf eine maximale Effektivspannung geregelt wird.

18. Stromversorgung nach Anspruch 17, **dadurch gekennzeichnet, daß** die Ladespannung für den Akkumulator durch einen Laderegler ohne Rücksicht auf die Spannungsfestigkeit eines oder mehrerer der an den pulsdauermodulierten Ausgang angeschlossenen Verbraucher auf einen im Hinblick auf Kriterien wie Ladungsreserve, Betriebstemperatur, Ladezustand und Lebensdauer optimierten Wert eingestellt wird.

19. Stromversorgung nach einem der Ansprüche 15 bis 17, **dadurch gekennzeichnet, daß** an den pulsdauermodulierten Ausgang Glühfadenbirnen der Fahrzeugbeleuchtung angeschlossen sind.

20. Stromversorgung nach Anspruch 19, **dadurch gekennzeichnet, daß** die Pulsdauermodulation mit einer Frequenz über 50 Hz, vorzugsweise etwa 90 Hz, erfolgt.
